(19) **Europäisches Patentamt European Patent Office Office européen des brevets**

(11) **EP 1 812 909 B1**

(12) **EUROPEAN PATENT SPECIFICATION**

(45) Date of publication and mention
of the grant of the patent:
**11.01.2017 Bulletin 2017/02**

(51) Int Cl.:
**G06K 7/00** *(2006.01)*  **G06K 7/10** *(2006.01)*
**G08B 13/14** *(2006.01)*  **H04B 5/02** *(2006.01)*

(21) Application number: **05825927.6**

(22) Date of filing: **14.11.2005**

(86) International application number:
**PCT/US2005/040977**

(87) International publication number:
**WO 2006/055431 (26.05.2006 Gazette 2006/21)**

(54) **RADIO FREQUENCY TAG AND READER WITH ASYMMETRIC COMMUNICATION BANDWIDTH**

HOCHFREQUENZETIKETT UND LESEGERÄT MIT ASYMMETRISCHER
KOMMUNIKATIONSBANDBREITE

ÉTIQUETTE DE FRÉQUENCE RADIO ET LECTEUR AVEC LARGEUR DE BANDE DE
COMMUNICATION ASYMETRIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **15.11.2004 US 98827104
12.11.2005 US 27092205**

(43) Date of publication of application:
**01.08.2007 Bulletin 2007/31**

(73) Proprietor: **Pahlavan, Kourosh
Palo Alto, CA 94303 (US)**

(72) Inventor: **ESKAFI, Farokh, Hassanzadeh
Brooklyn, New York 11215 (US)**

(74) Representative: **Schlief, Thomas P.
Canzler & Bergmeier
Patentanwälte Partnerschaft mbB
Friedrich-Ebert-Straße 84
85055 Ingolstadt (DE)**

(56) References cited:
**WO-A-03/094461   US-A- 4 331 971
US-A- 5 745 856   US-A1- 2002 135 815
US-A1- 2004 196 152   US-B1- 6 834 073
US-B1- 7 006 553   US-B2- 7 050 419**

## Description

## BACKGROUND OF THE INVENTION

### 1. Field of the Invention

This invention relates generally to communication between physical objects, item and inventory identification, tracking and management; and more particularly to a system for providing information concerning the identity or status of inventory using a plurality of labels enabled for communication with a computerized inventory management system so that label location and status are tracked continuously from a remote location.

### 2. Description of the Prior Art

Radio Frequency Identification (RFID) systems that utilize RF signals as means of communication between transponders, normally tags or similar modules, and interrogators, normally called readers, have been proposed by numerous prior art workers; see e.g. U.S. patents 3,299,424 and 3,689,885.

RFID tags in their simplest form comprise an ID, normally in a digital binary form, that is modulating an energy carrier signal such as an electromagnetic or acoustic wave, and is propagated by the tag as described in U.S. patent 3,713,148. The modulated carrier signal may be other energy carriers, e.g. acoustic waves or light beams.

Radio communication between a transponder tag and an interrogator can be carried out in two substantially different approaches. The first approach involves use of a circuitry in the tag. When exposed to the electromagnetic or acoustic field generated by the reader, the tag antenna comes into oscillation or similarly can couple with the reader field. The tag can use this coupling effect, which manifests itself as an alteration of the original field generated by the reader to present its ID or data. This coupling can be used to link the reader and the tag together. When radio frequency (RF) is used, this coupling can be magnetic coupling (near-field electromagnetic coupling) or backscattering (far-field electro-magnetic coupling). The electro magnetic field generated by a reader's antenna induces a current in the tag whose receiver is tuned to the frequency of the field. When the wavelength of the frequency range used greatly exceeds the distance between the reader's antenna and the tag, the electro-magnetic field may be treated as an alternating magnetic field and be considered as a transformer with one coil (antenna) located on the reader and the other coil (antenna) located on the tag. Magnetic coupling is commonly deployed in LF (Low Frequency) and HF (High Frequency) bands. The most popular frequencies for magnetic coupling are 135 kHz and 13.56 MHz. When the far-field electromagnetic coupling is deployed, the tag modulates its data back on to the electromagnetic field of the reader by changing the impedance of its own receiving antenna. This change of the impedance causes the tag antenna to effectively act as a reflector. Changes in the antenna impedance effectively reflect some of the electromagnetic energy back to the reader; the reader can then perceive the pattern of the modulation in the reflection. This phenomenon is called backscattering. Under these circumstances the reader can sense the presence of the tag, transmit data and receive the response back from the tag by demodulating the data that the tag has modulated into the field pattern caused by magnetic coupling or backscattering; see e.g. U.S. patents 3,516,575 and 3,541,995.

The second approach is to have a set-up like the one in conventional RF communication. The readers transmit signals that are received by the tags and the tags transmit signals, by means of a transmitter stage, that can be detected and decoded by the readers. With this approach, the structure of the signal transmitted by the tag is inherently independent of the signal received by it. The tag can receive information from the reader in one band and transmit it in a completely unrelated band and with a different signal structure and technology.

There are variations of the first approach that use backscattering in a band whose center frequency is an integer multiple or fraction of the center frequency of the received signal, but this flexibility is limited to similar simple techniques. There are also other approaches using Surface Acoustic Wave, Acoustomagnetic and electrical coupling as means of responding to the reader. However, these approaches can all be classified in the same category of devices that generate a reaction to the original field created by the reader and manipulate the same through this reaction.

In addition to the mechanism needed to modulate and propagate the response of the tag to the reader, other functional units in the tag require power. One such unit is the logic engine that processes and transports the stored ID or data. Power can be provided by a source of energy that is integrated with the tag, e.g. a capacitor, a battery or an accumulator of some kind. It can also be generated by other means, e.g. by capturing the electromagnetic energy propagated by the reader or similar sources of energy carrying signals. The former category of tags is called active and the latter is called passive; the hybrids constitute the category of semi-active tags. In the case of RF signals, the process of power recovery from the incident signal requires a circuitry that can convert electromagnetic energy to such current and voltage levels that can satisfy the power needs of the tag.

In the first approach, the tag can be a completely passive element in that it can be powered up by rectifying the incident signal and since it is merely reflecting back the incident continuous wave (CW), it does not need to take on the power-consuming task of generating a CW as a signal carrier for transmission. The passive tag responds by presenting its ID or other data through manipulating the incident signal that is in turn sensed by the reader monitoring the frequency band in which the particular modulation is expected.

In the second approach, transmitting the data back to the reader requires power like any other RF transmission, because a carrier needs to be generated and depending in part on the frequency of the carrier, the complexity of the modulation scheme and the required power output. The amount of required power can easily fall outside what can be recovered from the incident signal. Therefore, the second approach is often only applicable to the category of active or semi-active transponders.

Magnetic coupling works only at very short distances. Backscattering relies on small signal reflections that only offer a limited range and a low bandwidth for data exchange between the tag and the reader. Tags made with this approach are inexpensive to manufacture. Their transmission stages are active and their active control and data processing stages are uncomplicated and utilize low power. At short range, they can supply their needed power by capturing electromagnetic energy through simple and affordable power rectification circuitry located on the tag.

Regardless of whether the tag acts as an active transmitter or backscatters passively, communication between a tag and a reader is performed in specific regulated frequency bands. The amount of output power in each band is regulated to protect other devices and bands against interference and saturation. These bands are normally narrow bands in LF (Low Frequency 0.03 MHz to 0.3 MHz), HF (High Frequency 3MHz to 30 MHz), UHF (Ultra High Frequency 300 MHz to 3000 MHz) and Microwave portions of the RF spectrum.

Generally, there are a number of problems associated with currently available narrowband RFID technologies. Low data rate and lack of noise immunity limit an item-level tagging and high simultaneous number of interrogations by the reader. The tags are nearly useless in presence of metallic objects, conductive materials, liquids and in general such material that can cause absorption of the RF energy or detuning of the signal. Additional RF problems such as path-fading and multipath interference are frequently encountered by continuous wave (CW) technologies.

Attempts to remedy the above problems have thus far resulted in additional complexity that increases system costs and power requirements. These issues are mostly addressed by deploying a radio technology that spreads its signal over an extremely wide frequency band. Such technology is conventionally known as Ultra Wide Band (UWB) radio and is described in US patent 5,677,927. According to the Federal Communications Commission (FCC) definition, a UWB signal has a fractional bandwidth greater than or equal to 20% or a total bandwidth of 500 MHz or more regardless of the fractional bandwidth. The fractional bandwidth percentage is defined as:

$$B_f = 2\frac{f_h - f_l}{f_h + f_l} \cdot 100\% \geq 20\%$$

where $B_f$ is the fractional bandwidth, $f_h$ and $f_l$ are the highest and lowest -10dB frequencies of the signal spectrum. The fact that these extremely wide bands will traverse over narrow bands of frequency dedicated to different operations, puts severe constraints on the power output of a UWB transmitter that currently is at or below that of unintentional electromagnetic radiations from electric devices. The definitions set by FCC aim at drawing guidelines applicable to regulating the use of the technology rather than defining the qualitative differences that distinguish UWB from the conventional radio technology. Furthermore, the FCC may change the quantitative criteria that constitute the definition of UWB radio; it may even make substantial changes to the definition. Despite the plasticity in the definition, the only reliable reference is the one set by the FCC, even if it is subject to future changes. The FCC definitions and regulations can be found in the First Report and Order: Revision of Part 15 of the Commission's Rules Regarding Ultra-Wideband Transmission. Federal Communications Commission, February 14, 2002. ET Docket 98-153.

Before its current nomination, UWB Radio was intermittently called Impulse Radio, Carrierless Radio or Baseband Radio. In practice of UWB radio technology, very short duration impulses were deployed in a time domain that would create an extremely wide bandwidth in the frequency domain. That is, UWB was principally an Impulse radio that was per definition carrierless as opposed to conventional RF technology that uses a carrier frequency as means of propagating information. This specific technology is called Ultra Wide Band Impulse Radio (UWB-IR). The pulse shape was evolved to have optimal behavior in terms of antenna and receiver design as well as spectral efficiency. As a consequence of regulation by the FCC, approaches other than pure Impulse Radio have been proposed to be deployed within the regulated spectrum under the notion of UWB. The appeal of the newly introduced large spectrum segment caused new thinking in the domain of traditional radio design. Shannon's theorem, describing the relationship between the bandwidth and data rate, would yield equal benefits to a conventional radio technology that could be fitted to the ultra wide bandwidth. The theorem formulated as

$$C = B \log_2\left(1 + \frac{S}{N}\right)$$

describes how capacity (C) tends to remain high in spite of a very low signal to noise ratio (S/N) as long as bandwidth (B) remains high. Traditional radio technologies adapted to the wider bandwidth will not however yield other qualitatively crucial features of Impulse radio, such as low power and low complexity, resilience to multipath fading and unmatched location determination potential. A conventional radio technology will remain a Frequency Domain technology even at an ultra wide bandwidth as opposed to an Impulse Radio that is a Time Domain technology.

Narrowband RFID techniques are invented and utilized across a broad range of applications. UWB-IR radio communication has also been applied to RFID in several embodiments for different applications; see e.g. U.S. patent 6,550,674. The embodiments involve larger tags that deploy internal batteries and complex transceivers.

As a consequence there remains a need in the art for a communication system with tags that (i) packs a large amount of data such as inventory status, part location and the like; and (ii) is capable of simultaneously communicating with a massive number of transponders to enable item-level tagging; and (iii) consumes very low power, enabling remote operation, while at the same time being resistant to noise levels present in common industrial working environments.

## SUMMARY OF THE INVENTION

According to a first aspect the invention provides an asymmetric bandwidth communication system as defined in claim 1.

The present invention overcomes the shortcomings of the current RFID systems by merging Impulse Radio with conventional continuous wave energy carriers. Narrowband continuous wave and ultra wideband Impulse Radio technologies are synergistically combined. Beneficial effects of continuous wave and Impulse Radio communication between transponders (tags) and interrogators (readers) are enhanced providing high speed simultaneous communication of large packets of data from many non-powered transponders which receives required power from the interrogator's continuous wave. A CW link from the reader to the tag (downlink direction) enables transmission of high amounts of RF power in a well-defined narrow band. In the frame of allowed power envelopes set by regulatory authorities this narrow band of RF power energizes passive tags in a manner that allows their internal circuitry to be powered up wholly or partially by the received signals. Using an Ultra Wide Band Impulse Radio link from the tag to the reader (uplink direction) promotes a high data rate, low power, low cost, noise tolerant transmission and provides uncomplicated design. Massive simultaneous communications between tags and readers are economically and reliably achieved. Advantageously, the communications are resilient to multi-path fading, penetration and reflection problems prevalent with conventional RFID systems.

The present invention also overcomes problems encountered by conventional UWB-based transponder systems. A UWB radio transmits low power signals over a very wide band. Power per MHz of spectrum in a UWB-based system is typically much lower than that required for a CW radio, but the total output power integrated over the whole claimed spectrum need not be less-although it often is--than the power propagated by a conventional radio in its narrow band. Transmitting high power over the extremely broad band occupied by a UWB signal tends to pollute the RF spectrum and to interfere with wireless devices in many bands. For this reason, UWB signals are often transmitted at noise-level. Due to these constraints, UWB signals are typically not strong enough to energize tag circuitry from a useful distance. Moreover, even though the UWB Impulse Radio transmitter is simple to design, the receiver stage tends to be relatively complex and power consuming. Conversely, a narrowband receiver utilizes low power and is relatively noncomplex, especially when modulation schemes such as Amplitude Shift Keying (ASK) are involved. By using Time Domain Carrierless Impulse Radio (TDCIR) as means of transmitting data in the uplink direction (from the tag to the reader) and continuous wave signals in the downlink direction (from the reader to the tag), the beneficial effects of ultra wide band and of narrow band can be achieved simultaneously. The present invention provides a target and detector based on UWB-IR technology or more explicitly Time Domain Carrierless Impulse Radio (TDCIR) with a fractional bandwidth that is equal to or larger than 10% or a bandwidth of larger than 50 MHz, regardless of the fractional bandwidth.

Advantageously, there is provided in accordance with this invention, a tag that deploys separate transmitter and receiver stages. With this arrangement, the transmitter function can be completely decoupled from the limitations that the receiver design can impose on it. The ability to combine TDCIR for transmission and Non-TDCIR receiver stage, specifically narrowband continuous wave, constitutes an asymmetric mode of communication that is a representative example of the beneficial effects derived from such decoupling.

In accordance with the present invention, there are provided transponders and interrogators that operate in conformance with the asymmetric mode while, at the same time, maintaining backward compatibility with legacy RFID systems. Since the downlink communication, i.e. the communication from the interrogator to the tag, is carried out over a Non-TDCIR link, this link can retain the characteristics and specifications of legacy RFID systems. For example a Gen-2 tag (second generation RFID standard) communicates within the 915 MHz ISM band. The same continuous wave, command formats, modulation, coding scheme, collision detection and other techniques used in that standard can be used to communicate with the tag of the present invention.

Significantly, a tag interrogated by the system of this invention can communicate over its TDCIR link in the uplink direction, i.e. the direction from the tag to the reader. Since the TDCIR transmitter can have its own uplink antenna-which is the optimal approach from a signal propagation point of view-it does not functionally interfere with the Non-TDCIR elements of the unit. The TDCIR transmitter works in parallel with a backscattering, magnetic coupling scheme or any other approach used with conventional transponders. For example, the invented tag can have an additional circuitry for changing the impedance of its downlink antenna so as to create a backscattering effect similar to that of a conventional RFID tag. In this manner, the tag can be used in a legacy network and use e.g. backscattering in that network. On the other hand, such a tag can also work in a network that operates in accordance with the present invention, and thereby take full advantage of the network's features. That is to say, a tag interrogated by a legacy reader will respond by backscattering, magnetic coupling, and the like. When interrogated by a reader enabled by our invention, the tag will respond by means of TDCIR signals. Even in the case of a common antenna, this fully backward compatibility can be maintained. In such a system, the controller switches the antenna between TDCIR and Non-TDCIR signal paths in accordance with the direction of the data flow.

In accordance with the present invention, there is provided means for transmitting increased power to a transponder. Multiple tuned circuits are deployed in the front-end of the transponder receiver so as to capture energy from different Non-TDCIR bands simultaneously.

## BRIEF DESCRIPTION OF DRAWINGS

The invention will be more fully understood and further advantages will become apparent when reference is had to the following detailed description and the accompanying drawings, in which:

FIG. 1 is a block diagram of the main components of a transponder or tag in the first embodiment of the invention;

FIG. 2 is a block diagram depicting a transponder that is capable of receiving a TDCIR signal according to the fourth embodiment;

FIG. 3 is a block diagram depicting a transponder is capable of altering the impedance of the non-TDCIR antenna using circuitry to achieve backscattering, or magnetic coupling;

FIG. 4 is a block diagram depicting a simplified interrogator/ reader;

FIG. 5 is a block diagram depicting an interrogator/ reader with the capability to transmit TDCIR signals;

FIG. 6 is a schematic diagram of the basic communication between a transponder tag and interrogator/ reader;

FIG. 7 is a block diagram depicting a multi-band energizing and communication design using passive and active tags in a network of interconnected readers;

FIG. 8 is a block diagram depicting a legacy transponder compatibility with legacy compatible TDCIR transponder communicating to a legacy interrogator and legacy compatible TDCIR interrogator/ reader;

FIG. 9 is a block diagram depicting a transponder that is capable of receiving non-TDCIR and transmitting TDCIR signals according to the first embodiment;

FIG. 10 is a block diagram depicting a partly powered semi-active transponder that is capable of backscattering;

FIG. 11 is a block diagram depicting a transponder that is with a common antenna for TDCIR transmission and non-TDCIR reception;

FIG. 12 is a block diagram depicting a transponder according to the third embodiment that is capable of transmitting and receiving TDCIR signal and receiving non-TDCIR signal;

FIG. 13 is a block diagram depicting a transponder that is capable of receiving a multiband signal;

FIG. 14 is a schematic diagram depicting the direction of the signals and the overlapping nature of the energizing signal with respect to the data exchange between the multiple tags and a multiple readers that is capable of multiple simultaneous continuous wave radio transmissions;

FIG. 15 is a block diagram depicting a TDCIR transmitter;

FIG. 16 depicts a Gaussian monocycle as used in the TDCIR transmitter of the first embodiment.

FIG. 17 depicts a 5th derivative of a Gaussian as used in the second embodiment; and

FIG. 18 depicts the Power Spectral Density of the monocycle (solid line), the 5th derivative of Gaussian (dotted line) and the FCC envelope (dashed line).

## DESCRIPTION OF THE PREFERRED EMBODIMENTS

A fundamental element of the present invention is the UWB-IR technology. In this document, we do not restrict ourselves to the definitions of UWB as established by the FCC. The uncertainty of the limits of the current regulation and the resulting plasticity of the FCC definitions suggests the necessity of defining this technology as utilized and applied to this invention. Accordingly, as used hereafter, such UWB-IR technology is referenced as Time Domain Carrierless Impulse Radio (TDCIR); and defined as a time domain carrierless impulse radio with a fractional bandwidth equal to or greater than 10%, or a bandwidth greater than 50 MHz, regardless of the fractional bandwidth.

$$B_f = 2 \frac{f_h - f_l}{f_h + f_l} \cdot 100\% \geq 10\%$$

where $B_f$ is the fractional bandwidth, $f_h$ and $f_l$ are the highest and lowest -3dB frequencies of the signal spectrum.

The embodiments that are described here are all based on currently mandated limits set by the FCC and fully compliant with both the definition of UWB as set by the FCC and TDCIR, as herein set forth. The criteria for all the claims herein are based on the definition of TDCIR, unless explicitly expressed otherwise. Impulse Radio (IR) offers an extremely simple transmitter and receiver design. It entails unmatched features that are not offered by any single conventional frequency domain radio technology. The signal is an impulse and this impulse is not modulated on a carrier, but is freely radiated into the air. Modulation is accomplished by altering the individual or shared characteristics of the impulses directly. Impulse Radio is qualitatively different from conventional narrowband and wideband CW radio technology. It is a carrierless radio that generates an extremely wide bandwidth. Even continuous wave radio technologies such as CDMA that use spread spectrum techniques are fundamentally different from Impulse Radio and behave fundamentally differently. Significantly, IR is carrierless and the signal is spread over a far larger spectrum than the spectrum spanned by CDMA. Wideband CDMA and CDMA2000, two very well-known wideband technologies in the 2GHz frequency range, have several bands clustered together, and span only over approximately 5 MHz of spectrum. The definition of TDCIR in the 2GHz range requires a band of at least 50 MHz wide.

The duration (pulse width) and shape of an impulse determine the signal bandwidth and its center frequency. Gaussian monocycle is a commonly used impulse for IR transmissions. A Gaussian monocycle is the first derivative of a Gaussian and is defined as:

$$G'(t) = A\frac{t}{\tau}e^{-\left(\frac{t}{\tau}\right)^2}$$

where A is an amplitude factor, $t$ is the time variable and $\tau$ is a parameter that determines the pulse width.

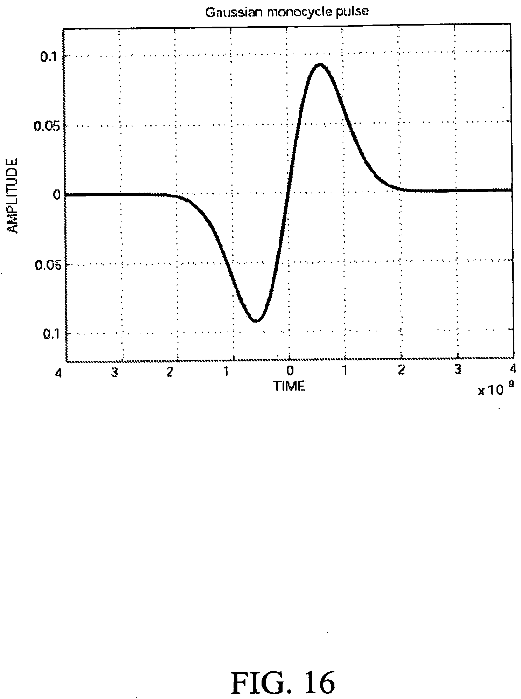

This signal is depicted in FIG. 16. The Figure illustrates the signal in the time domain and its Power Spectrum in the frequency domain. The shorter the impulse is, the wider its spectral spread will be. The center frequency $f_c$ of the monocycle is nearly the inverse of the pulse width $T_w$:

$$T_w \approx 1/f_c$$

which is clearly visible in the Figure; the 4 nanosecond wide pulse has its center frequency in around 250MHz and occupies nearly 1 GHz of spectrum.

The 5th derivative of the Gaussian has attracted considerable attention, because of its ability to fall under the large frequency swath in between 3.1 and 10 GHz. It is expressed as:

$$G^5(t) = B\left(\frac{60t}{\tau^5} - \frac{80t^3}{\tau^7} + \frac{16t^5}{\tau^9}\right)e^{-\left(\frac{t}{\tau}\right)^2}$$

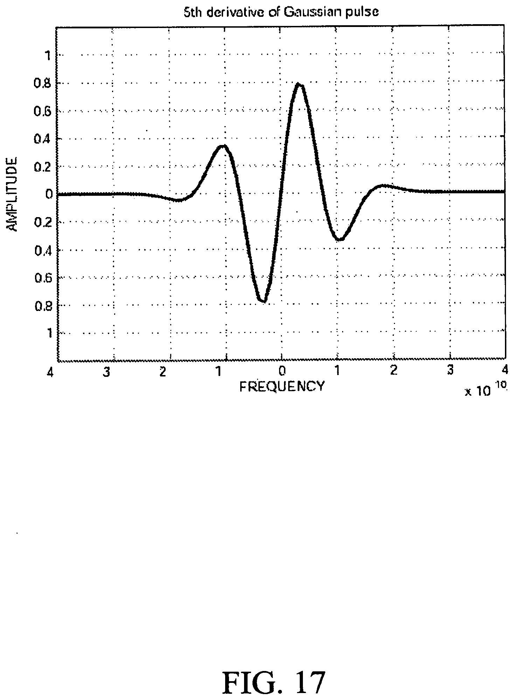

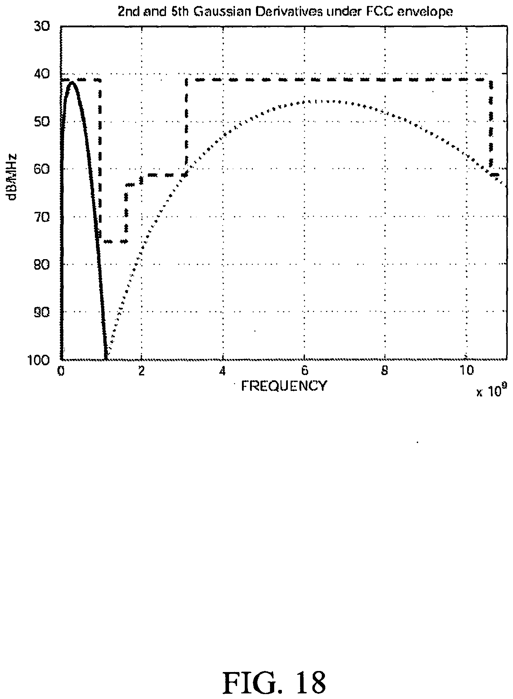

where B is an amplitude factor. This signal is depicted in FIG. 17. FIG. 18 shows the Power Spectral Density of the monocycle and 5th derivative as a thick dotted line along with the FCC mandated limit as thin dotted line.

Recent attention to Impulse Radio and its application to RFID have brought about new possibilities in terms of higher data rate, lower power consumption, location determination, resilience to multi-path fading and environmental impacts such as detuning and material penetration. The UWB Impulse corresponds to an extremely wide bandwidth in the frequency domain.

Due to its impulse nature, the transmitter stage in the UWB-IR radio is very simple. The requirements of the UWB receiver stage on filters, amplifiers and detection circuits that can handle the extremely wide bandwidth and short noise level pulses, among other factors, make its design more challenging. In comparison, with respect to power implementation difficulty and complexity a conventional radio can be more challenging in the transmitter stage and less challenging in areas that involve constraints imposed on the amplification and detection stages of the receiver.

UWB-IR radio is extremely low power while it offers a very high data rate. Due to its very wide frequency content, impulses can penetrate material and still maintain relatively good resolution. They are resilient to multi-path limitations imposed on conventional radio. These qualities have made UWB-IR a natural choice for high performance Radars and ground penetrating mine detectors.

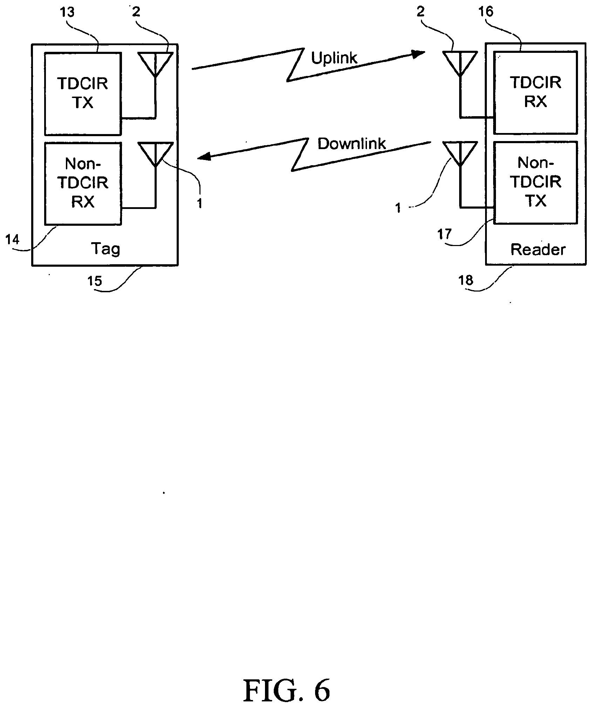

The embodiments described herein all share a central core: a TDCIR uplink and a non-TDCIR downlink; as detailed in FIG 6. At the same time their fundamental point of departure from each other is on whether they utilize other additional up- or downlink technologies. All of the transponder embodiments here use continuous wave RF signals at least partially as the source of energy, but the second embodiment also uses the same continuous wave link for additional uplink communication and the fourth embodiment uses TDCIR signals for additional downlink communication. The additional TDCIR downlink aims at bringing the TDCIR signal properties to full utilization in both directions. The additional non-TDCIR uplink is used to keep the transponder backwardly compatible to legacy systems. The difference between these categories, although subtle, is so fundamental in terms of functionality that they are claimed as separate embodiments.

The first embodiment represents a basic design in that it only utilizes TDCIR uplink and non-TDCIR downlink. The interrogator in this first embodiment uses the 915MHz UHF ISM band as its non-TDCIR front end to interrogate the tag, called the downlink. The used band could have been in any portion of the spectrum where radio communication is possible; UHF 915 MHz ISM band is publicly available and offers a good compromise between data rate and range, which is why it has been chosen here and the Gen-2 standard. The recipients of these narrowband signals, i.e. the transponders, transmit their responses back to the readers in a stream of TDCIR impulses. This means that each reader uses at least a CW transmitter and a TDCIR receiver, while each tag utilizes at least a TDCIR transmitter and a narrowband receiver. This asymmetric utilization of the bandwidth, which is the core of this invention, provides many benefits including:

> 1) A TDCIR transmitter is very simple, low power, easy to design and low cost. This is true for a narrowband receiver as well. By deploying these two simplest combinations of the TDCIR and narrowband technologies, the tag, which is the most critical element of an RFID network, will end up having a simple and low cost solution;
> 2) A TDCIR transmitter offers an RFID tag that is resilient to multipath fading, performs well in penetrating most non-metallic materials and does not suffer as much as CW signals from reflection problems caused by metallic objects, the Achilles heels of all narrowband RFID tags.
> 3) Furthermore, Impulse Radio provides an RFID system with unique capabilities in terms of location determination that are not offered by CW radio. A major obstacle in determining the distance to an object by means of RF signals is that echoes from the original signal can travel along a multitude of paths that easily become undistinguishable from the shortest or direct path. UWB signals, however, have distinctive windows of arrival in the time domain. Detecting UWB impulses in the expected window of arrival dramatically increases the ability to isolate the real signal from its echoes and thereby augments the location determination abilities of the system.
> 4) The CW receiver of the tag can be tuned to listen to a narrow channel, which in turn can enhance detection ability. The virtue of having a narrow band receiver in the tag also enables the reader to exploit the maximum allowable power output in the allowed band without interfering with other radio systems. Thereby the reader can provide enough signal strength to power up the tag through its narrowband receiver. A reader with a UWB transmitter would not be able to output enough RF energy to power up the tag at useful distances, without polluting its utilized spectrum or enforcing impractically large antenna on the tag. Since the transmitter stage of the tag is a very low power UWB radio and its receiver stage can provide it with more power through the powerful incident narrowband signals, a tag that can be completely passive and still offer long range, high bandwidth location determination and relative immunity to reflection, multipath fading and absorption can be realized.

The tag in this embodiment uses a Gen2 protocol on the downlink and powers up and communicates with the tag in accordance with those protocols; see (Gen2 Specs 05). The Unique Identifier (UID) code of the chip is stored in its memory and is retrieved by the Finite State Machine (FSM) block that manages and supervises the different functions of the chip. The retrieved UID is encoded and shifted out in a bit stream of baseband pulses to the delay generator. The latter transmits each bit delayed by a certain amount of time that is a function of the position of each pulse in its time slot and in its frame. A pulse shaping module generates Gaussian monocycles of 4ns duration that are phase shifted 0 and 180 degrees for a logical 1 and 0 respectively. ("Monocycle: A Study of a Versatile Low Power CMOS Pulse Generator for Ultra Wideband Radios", Kevin M. Marsden , Masters Thesis. Virginia Polytechnic Institute and State University, Dec. 2003) suggests a simple yet very versatile approach to generate a Gaussian monocycle by essentially four transistors.

The output bridge acting as a power amplifier, the TDCIR antenna and the ESD protection block together also act as a bandpass filter on the monocycle and are designed to filter out the out of band frequencies.

The second embodiment deploys an additional impedance manipulation circuitry that makes the transponder completely accessible under legacy standards such as the UPC Global Gen2 standard (Gen2 Specs 05). The price to pay is an additional block of backscatter modulator, a more complex bascband/MAC unit and a non-TDCIR antenna that cannot anymore be optimized for reception only.

This second embodiment also presents a rechargeable power source that is charged by the incident power and runs the system when the incident signal is missing or too weak to provide the system with enough power. The presence of an external power source is a trivial matter when the data communication is a standalone unit as opposed to a backscattering system that is made to reflect back the incident signal rather than propagate the signal by its own power.

The high data rate offered by the TDCIR transmitter makes it possible to have additional sources of data flow that can use the invented circuitry as a transceiver for communication with the reader or the outside world. Two sensor circuits, one on-chip and another off-chip in this embodiment present the instances that demonstrate this ability. The on-chip signal is a temperature signal that uses the CMOS band-gap voltage of the chip to detect temperature variations of the chip and the item on which the tag is mounted. The external sensor is a MEMS vibration detector that can provide the reader with data about what kind of environment the tag is or has been experiencing in terms of temperature and vibration in real time or during transportation.

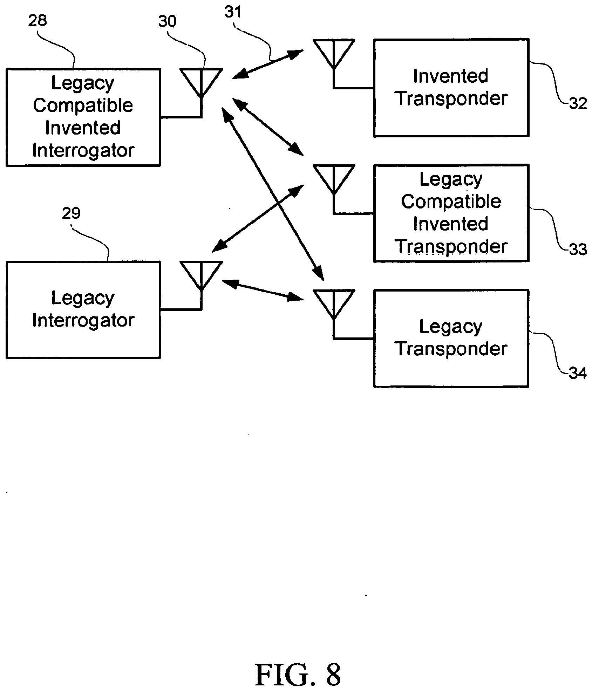

This second embodiment also utilizes a "Backscatter Modulator" block that effectively renders this embodiment fully backward compatible with legacy systems. This function is elaborated on later on in this section and in the description of FIG. 8.

This second embodiment uses a 5th derivative of Gaussian as its impulse. This pulse is depicted in FIG. 17. As presented in FIG, 18, this pulse is occupying the bulk of the available spectrum in the 3.1-10 GHz band. Kim et al. suggest an approach to generate a 5th derivative impulse by well known digital elements; see ("5th derivative: All-digital low-power CMOS pulse generator for UWB system", H. Kim, D. Park and Y. Joo, ELECTRONICS LETTERS 25th November 2004 Vol. 40 No. 24).

There are other approaches to impulse generation that more efficiently utilize the FCC envelope. However, since most antennas act as differentiators on signals, a pulse like a Gaussian whose derivatives also maintain its spectral characteristics, offers a less surprising practical outcome.

The third embodiment is principally similar the first embodiment, but it presents the ability to use the same antenna for the TDCIR transmitter and the continuous wave receiver. An ultra wide band radio's fundamental dissimilarity with conventional continuous wave radio manifests itself also in the antenna circuitry and its design. While it is a simpler matter to tune a narrowband antenna to the frequency band of interest to the receiver, an ultra wide antenna will not have a tuning frequency to begin with. A typical narrow or wide band antenna will suppress a considerable portion of the signal spectrum of an ultra wide band radio. However, there are antenna technologies that can act as good compromises for both radios. Fractal antennas constitute one such technology that cannot fully exploit the ultra wide band nature of a TDCIR radio. Their multiple frequency sensitivity can cause an ultra wide band of multiple bands linked together. The dips between the bands can be successfully used as means to filter out major interferers such as broadcast radio and TV, mobile phones and related access points, Wireless LANs, etc. This embodiment utilizes a Sierpinski antenna to achieve this set of features. ('On the Behavior of the Sierpinski Multiband Fractal Antenna' Carles Puente-Baliarda, Jordi Romeu,Rafael Pous, Angel Cardama, IEEE TRANSACTIONS ON ANTENNAS AND PROPAGATION, VOL. 46, NO. 4, APRIL 1998) describes some details involved in design of a Sierpinski antenna.

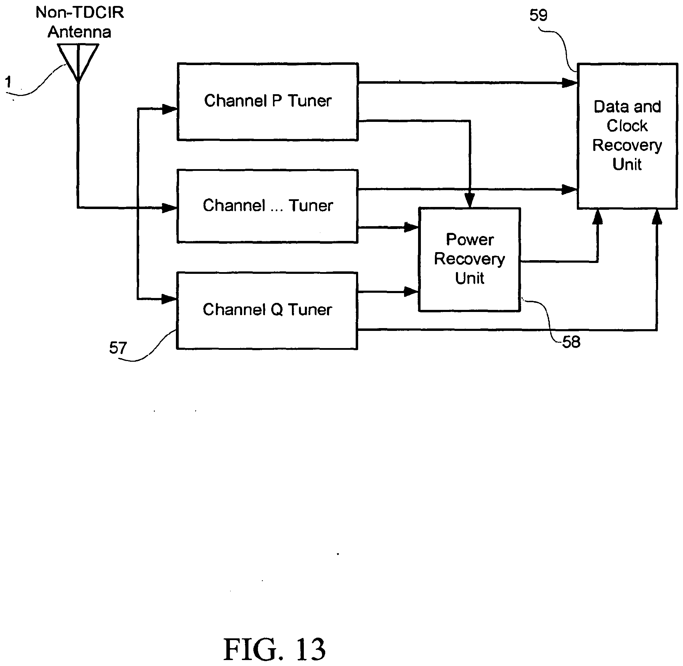

A variant of this invention deploys a multi-band continuous wave energy collection segment that collects energy from several different frequency bands that can be proactively generated by the reader or an energizing beacon, or that are ambient signals available in the environment. This third embodiment and its use of the Sierpinski antenna constitute a superb embodiment where this energizing scheme can be applied. This multi-band energy absorption scheme is detailed in FIG. 13.

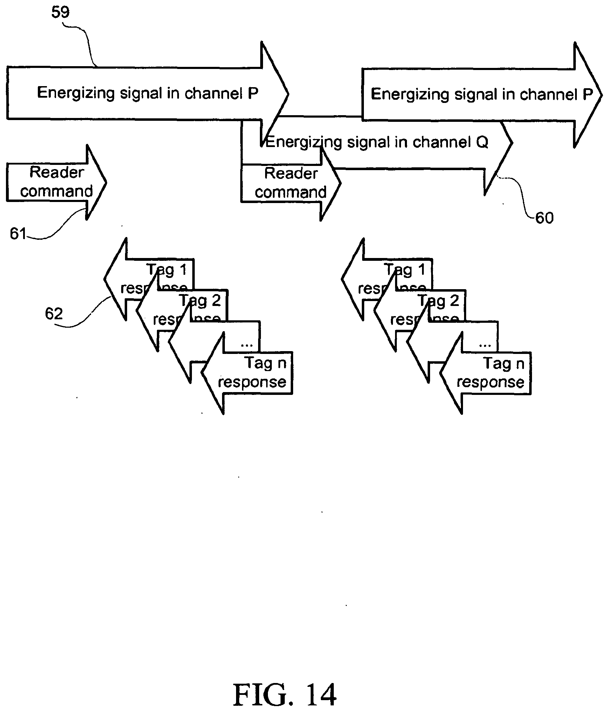

A reader signal is normally a carrier on which the reader command and data are modulated. This carrier signal also provides the power for the tag. The signal from the reader to the tag can be continuous or sequentially pulsed, depending on the way the tags need to be powered up, the number of the tags, and the multi-access method used for simultaneous access of multiple tags. A reader can choose to power up tags with a combination of bands and propagation techniques. For example, utilizing different bands can be used as means of accessing different classes of tags. In the same way, the directionality of the antenna can be exploited to access tags located in that particular direction. If the network deploys a TDMA (Time Division Multiple Access) scheme, the tags will respond sequentially in accordance with the timing protocol. However, the duration and the band in which the signal is transmitted by the reader can cause different tags or subnets of tags to be powered up and respond, simultaneously or sequentially. FIG. 14 illustrates another embodiment of the invention in which case the carrier signal is continuously broadcast over all tags in the network in channel P, while the same reader also transmits a narrow band signal in band Q, but only for a specific subnet of tags, which can, e.g. need the extra power because of being far from the reader. In this embodiment, the tag is equipped with additional circuitry that allows the tag to capture electromagnetic power from different bands of the spectrum. For example, the limits of FCC on power output in the 915 MHz ISM (Industrial Scientific and Medical) band can be combined with the power output allowed in the 433 MHz and 2.4 GHz ISM bands. A tag that can recover power and/or data from both of these bands can enhance its ability to gain more RF energy and achieve a better total performance.

The multi-band energizing scheme can be used as a multi-access facilitator, but it can also provide increased bit-rate from the reader to the tags, enhance location determination, and in general increase the system performance.

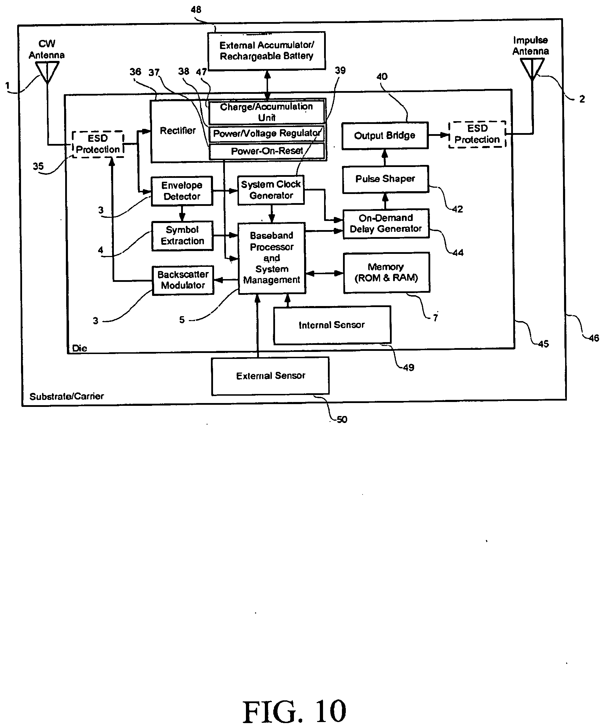

In the second embodiment of the present invention, the narrowband receiver of the tag can behave like a legacy RFID tag, e.g. perform magnetic coupling or backscattering. In this embodiment, the tag will have the additional circuitry to create the return signal in accordance with the technology in use (e.g. magnetic coupling, backscattering, etc.) and modulate its ID and data on this returned signal. FIG. 8 illustrates this embodiment. As depicted in the figure, a reader that is an embodiment of this invention with said backward compatibility can communicate with legacy tags as well as tags communicating using TDCIR. Furthermore, tags of this second embodiment exhibit backward compatibility and communicate with legacy readers and systems. FIG. 10 shows this backward compatibility of the second embodiment using the "backscatter modulator".

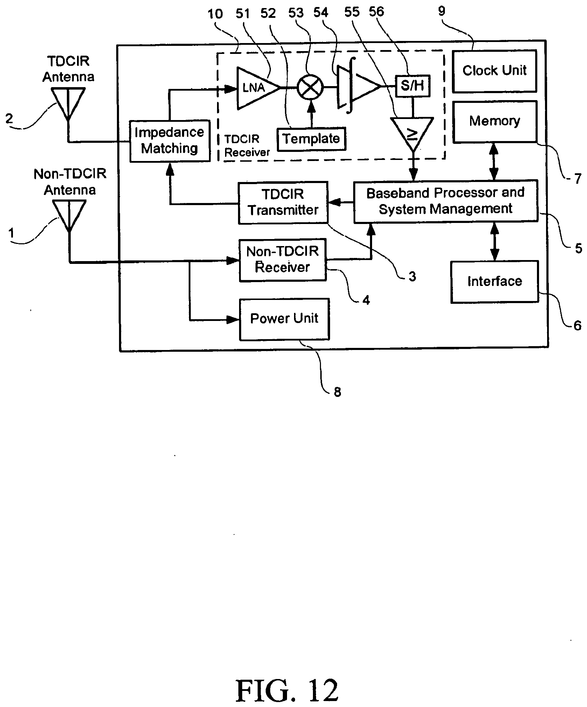

The fourth embodiment is depicted in FIG. 12 and presents a transponder similar to the first embodiment with the major difference that the fourth embodiment implements a TDCIR receiver as well. The downlink is both a CW signal and a TDCIR signal, while the uplink is TDCIR only. The benefit of this design is in its ability to exploit ultra wide band features in both directions. The receiver block constitutes a very simple form of ultra wide receiver composed of an ultra wide band Low Noise Amplifier (LNA) that is mixed with a signal template. The output is forwarded to an integrator that accumulates the mixer output into values that can be detected by a comparator at the output as zeros or ones. This fourth embodiment is also equipped with a general purpose interface that can be used to connect it to other devices or be used as a programming or testing port.

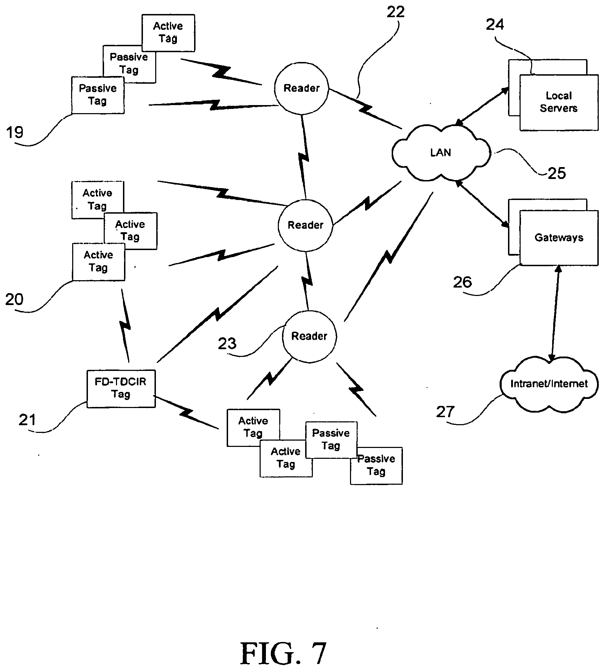

At network architecture for different embodiments of this invention is illustrated in FIG. 7. A multitude of readers can be present in this network, each serving a number of tags that may be members of different subnets of different readers simultaneously. These tags could be passive, active or legacy tags that do not comply with the technology described in this invention, but still accessible to the readers, because of the backward compatibility of the readers to the legacy RFID tags.

Readers communicate with the tags wirelessly. However, they can communicate with each other through a wired or wireless communication. This flexibility in connection is also true about the communication between readers and local servers and gateways. The readers and other elements of the network such as local servers, gateways, databases, and storage units can share or create a Local Area Network (LAN) that can internally be interconnected with wires or wirelessly. Finally, the network can connect to external networks and the Internet through its gateways or other computers in the LAN that are capable of external communication.

FIG. 7 also illustrates the high-level architecture of the system that is an embodiment of this invention. At the lowest level of the hierarchy, there are a considerable number of items with active and passive tags mounted on them. The presence of a TDCIR transmitter in the tags warrants for the system's capability to reach a massive item-level deployment; the high data rate and thereby a large system capacity allows for mass interrogations in short time intervals. A TDCIR transmitter is capable of achieving data rates in the order of hundreds of mega bits per second. Even though such data rates require a level of power consumption and baseband complexity that the economy and needs of an RFID tag do not normally match, lower data rates at lower power consumption and lower complexity can be achieved by a suitable trade-off; notably since impulse radio is inherently capable of effecting such trade-offs. For example, a higher bandwidth can be exchanged for robustness, by devoting a larger portion of the total bandwidth to pulse repetitions rather than useful data. In the same manner decreasing pulse repetition can result in lower power consumption or longer intervals between the impulse bursts can result in lower data rate, but also lower power consumption. A backscattering radio has an inflexible design; it is basically a reactive system that can only manipulate an available electromagnetic filed and is incapable of proactive adjustments to the needs and realities at hand. Even a standalone CW transmitter has limited maneuverability compared to an Impulse Radio transmitter, among other things because it can only communicate by modulating its information on a continuous wave carrier signal that is a major source of power consumption and whose well-defined frequency constrains the system from adapting to environmental and conditional adjustments. A CW system with comparable complexity and power demand cannot match the capacity of an ultra wide band system. The high capacity can in turn translate into a larger set of tags, because the amount of data that each tag transmits is limited and often constant.

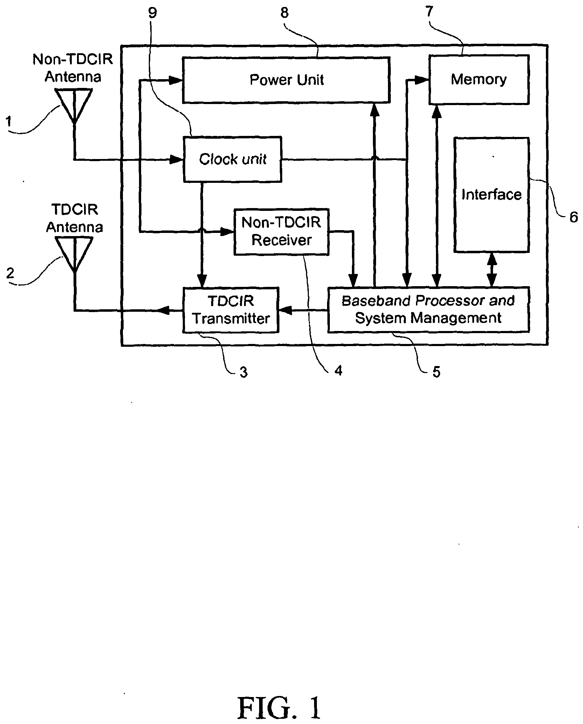

Referring to FIG. 1 there is shown a block diagram of the main components of a transponder or tag in the first embodiment of the invention. A non-TDCIR antenna (1) is the first stage of the receiver front-end that is capable of absorbing energy from non-TDCIR signals in general and electromagnetic energy from the continuous waves radiated from interrogating devices in particular. In the case of a passive UHF RFID tags, this antenna is tuned to the UHF band. The continuous wave signal radiated from a reader carries the system clock signal, commands, data and time references that are recovered by different units of the tag. The power recovery unit (8) rectifies the incident continuous wave and regulates it to voltage levels required by different subsystems of the tag. A Power on Reset unit monitors the voltage levels of the power recovery unit to make sure the total unit will function properly. The clock unit (9) and the non-TDCIR (4) blocks take the incident signal detect its envelope and recover the data of interest. These units normally share an envelope detector on which the clock and data are modulated, but in some cases, the clock signals are directly recovered from the incident wave. The clock unit also provides other free-running or synchronous clock signals, required by units that have different requirements on the system clock, such as the baseband/Medium Access Control (MAC) units (part of 5), impulse generator (part of 3) and potential FLASH memory blocks (part of 7). System management, control, communications and computations are handled by the baseband processor and system management (5). This unit also controls all the peripheral interfaces (6) to circuitries inside or outside the chip. Varieties of this unit may require a combination of different memory technologies represented by block (7) in the figure. The task of transmitting the tag data back to the reader lies upon the TDCIR transmitter (3) that receives its bit stream from (5), positions and shapes the impulse properly and runs them through the amplification and filtering stages as necessary. This signal is propagated by the TDCIR antenna (2).

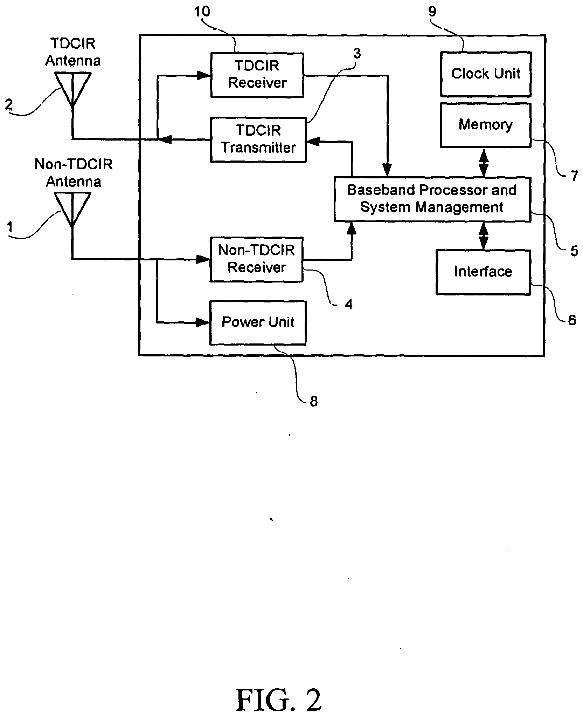

Referring to FIG. 2 the TDCIR path starting from a TDCIR antenna (2) contains not only a TDCIR transmitter (3), but also a TDCIR receiver (10) according to the fourth embodiment of the invention. The tag unit retains the capability to receive non-TDCIR e.g. continuous wave signals that at least partially power it up. This receive path can deploy a power unit (8) whose function includes power recovery from the incident non-TDCIR energy, but also a non-TDCIR receiver (4) that can decode the information modulated on the non-TDCIR signal, including the clock and command.

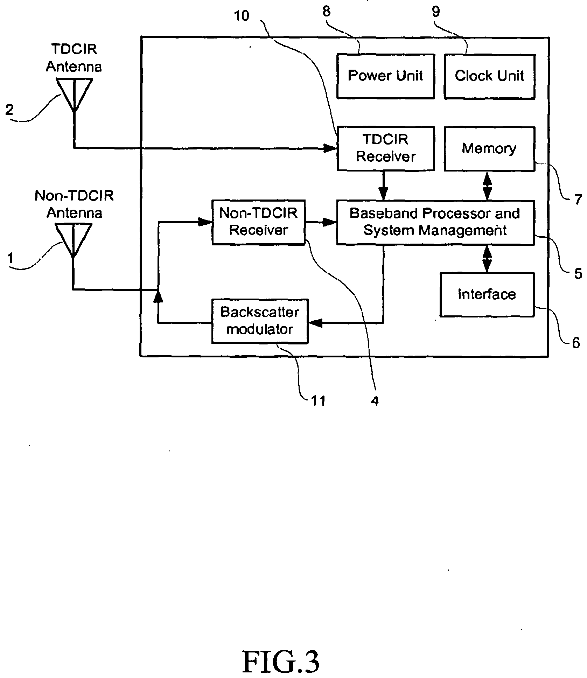

FIG. 3 illustrates a transponder is also capable of altering the impedance of the non-TDCIR antenna circuitry (1) to achieve backscattering, magnetic coupling or similar couplings according to the second embodiment. The non-TDCIR receiver (4) and the modulator (11) share the non-TDCIR path. The baseband/MAC processor (5) manages the control, reception and transmission of the data to and from (11) and (4).

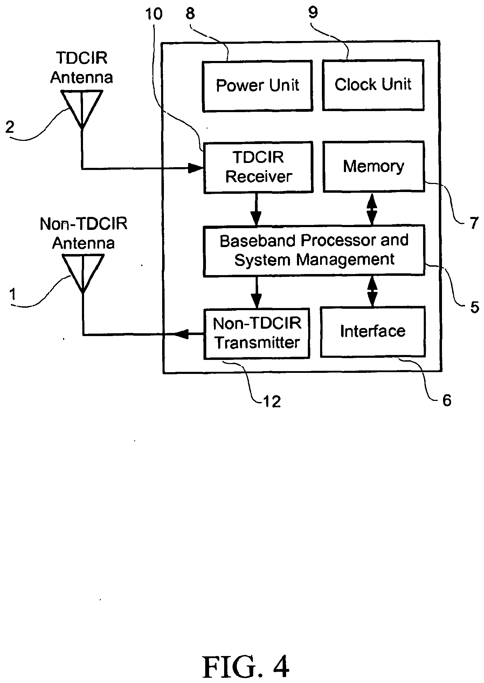

FIG. 4 depicts a simplified embodiment of an interrogator/reader in accordance with this invention. The reader generates non-TDCIR signals through the non-TDCIR transmitter (12) and antenna (1), e.g. continuous wave RF signals with enough power inside the limits of allowed radiation that can power up the invented tag. This signal carries all the information needed by the tag including command and clock encoded in the signal by the baseband/MAC processor/ FSM (5). Upon reception of enough power, the tag wakes up, recovers clock, decodes the received information, e.g. a command, and reacts in accordance with that information. For example, if a command pertains to sending the Unique Identification number of the tag (UID), the tag processor fetches this information from the memory, processes it to match the communication protocol used and feeds it to the TDCIR transmitter of the tag. The TDCIR path in the reader (2) through (10) receives the TDCIR signal containing e.g. the UID from the tag and forwards it to the baseband/MAC and systems management of the reader (5) which, after resolving the baseband signal and recovering that particular UID among all other simultaneously inflowing information streaming in from the multitude of other tags, stores in its local memory (7) and/or transfers it to the external network via its multitude of interfaces to other internal or external units.

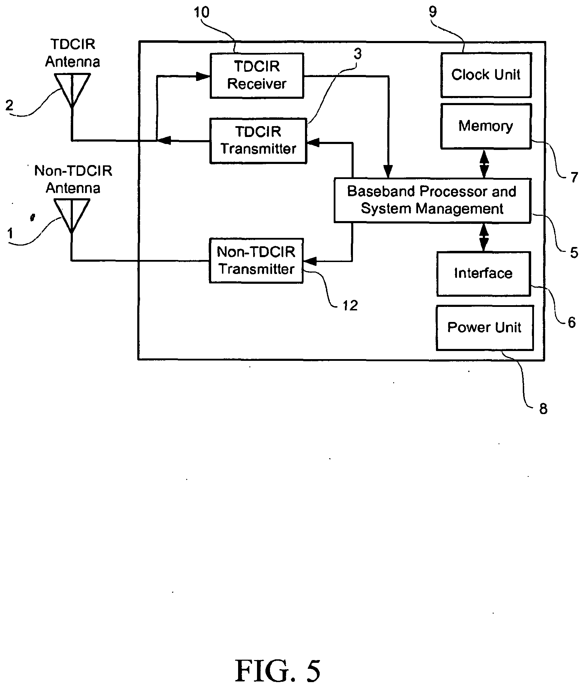

FIG. 5 illustrates a reader with the additional capability to also transmit TDCIR signals so as to match the tag according to the fourth embodiment. The TDCIR path includes TDCIR antenna (2), TDCIR receiver (10) and TDCIR transmitter (3). This embodiment can not only power up and communicate with tags with a non-TDCIR receiver by using (12), but also can establish a data communication link with embodiments such as the one depicted in FIG 2. The main benefit of such an embodiment is that it realizes a full-fledged Impulse Radio transceiver capable of deploying all benefits of UWB-IR such as high data rate communication, resilience to environmental impacts, penetration and positioning in both directions of communication between the tag and the reader.

FIG. 6 illustrates the direction of communication and the radio technology of the transmitter and receiver units in a tag (15) and a reader (18) respectively. It also elucidates the directions called "uplink" and "downlink". The TDCIR (13, 16) and CW (14, 17) blocks are entangled into each other since they share many subsystems and provide mutual resources such as clock, synchronization, power management, data paths, etc. for one another; the block description is a high-level abstraction only and is not meant to imply separated blocks. TX stands for transmission function and RX stands for receiving function.

Fig. 7 depicts an embodiment of the front-end of a multi-band energizing and communication design in a tag. This is a high-level architecture of an RFID network. Each reader serves a number of tags (19, 20, 21). A multitude of readers (23) can create a cellular, mesh or adhoc network. By building a cellular network, each interrogator can create a cell that covers the tags located in its coverage area or cell. Dislocation of tags or readers, results in handover of tags from one cell to another, as in a cellular telephony network or a Wireless LAN network. A cell controller can decide whether a tag is served better by one reader or another. Even readers can decide to actively seek another reader to serve a tag that cannot be served by them, e.g. because it is located in the periphery of their coverage area. This network serves tags that can be passive (19), active (20), semi-active and even Full-Duplex TDCIR (FD-TDCIR) tags (21). The latter is a tag that in addition to its non-TDCIR receiver, also has the capability to both transmit and receive TDCIR signals and by virtue of this capability is not only aware of what the reader transmits to the tags, but also can receive information from other tags of this invention. Furthermore each reader subnet can communicate with other subnets by means of wireless or wired links (22). All readers can also be served by other local servers (24) over a Local Area Network (25) or remote servers over a Wide Area Network (27) interfaced by e.g. gateways and other proxy servers (26).

FIG. 8 is a block diagram of one embodiment of the invention. In this embodiment, the tag and the reader are designed such that they can function in a legacy network as well as the network of responders (tags) and interrogators (readers) as described by this invention. An invented reader that is compatible with legacy transponders (28) can communicate and interrogate legacy transponders (34), invented tags that are backwardly compatible with legacy transponders (33) and invented transponders deploying uplink TDCIR and downlink non-TDCIR technologies (32). A legacy interrogator (29) can communicate with its own legacy transponders (34), but also with invented transponders that are backwardly compatible with legacy systems (33), because the latter behave like legacy transponders when they find themselves interrogated by legacy readers.

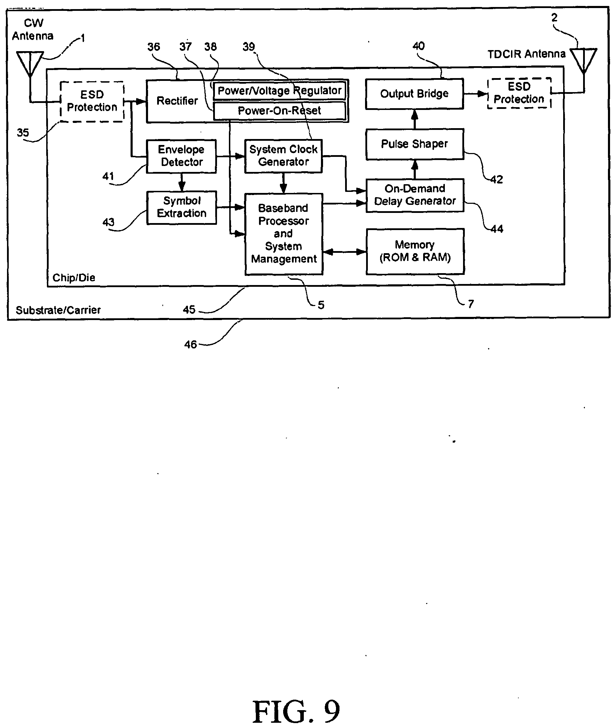

Fig. 9 details the first embodiment of the transponder. A CW antenna (1) is tuned to the frequency of the incident UHF 915 MHz signal radiated by the invented reader and follows the UPC Global Gen-2 standard (Gen2 Specs 05). An Electrostatic Discharge (ESD) protection circuitry (35) protects the CMOS circuit against discharges that may occur during manufacturing, antenna attach and touch of the antenna substrate. The incident CW UHF signal is then directed to a power recovery block (36) that rectifies the electromagnetic wave, pumps it up to the required voltage level, regulates (38) and monitors (37) it for occurrence of under-voltage and over-voltage levels so as to know when to liven up the chip or shut it down to avoid interference with the network when not enough power is available.

Once power is available, different units of the chip can be started. The envelope detector (41) extracts the signal envelope and passes it to the symbol detection (43) and clock recovery/ generation (39) units. The latter generates all the different clock frequencies that may be required by different blocks of the chip. It also kick starts the on-demand delay generator (44) that generates delay periods as commanded by the baseband/MAC/System manager unit and in synchronization with the system clock. The symbol extraction uniT (43) transfers its demodulated symbols to the baseband unit (5) where they are decoded, parsed and interpreted as data and commands and state information. The Finite State Machine (FSM) that is labeled as Baseband processor (5) in the figure, acts as the central nervous system of the chip, where all central control, management and monitoring occurs. This unit has access to a memory block (7) that is composed of both volatile and non-volatile memory (here Read Only Memory, ROM and Random Access Memory, RAM). This memory contains UID, codes and all the data that is required for storage in the tag. The FSM in (5) executes its tasks in accordance with the received commands, the current state and the available data on the chip. When commanded to transmit a piece of data, e.g. its UID, the FSM retrieves the related data from the memory, encodes it and provides the on-demand delay generator with the encoded data. The latter generates the delay which entails a trigger signal for the impulse generating and pulse shaping unit (42). This unit together with the output bridge circuit (40) creates a Gaussian monocycle with the pulse width of 4ns with a maximum peak power of -42 dB as depicted in FIGS 16 and 18. The Gaussian monocycle spans the spectrum between DC to 960MHz with a center frequency of nearly 250MHz and a bandwidth far beyond the minimum needed for qualification as a TDCIR. This signal is propagated by a TDCIR antenna (2) that is like its CW counterpart (1) a part of the substrate or the carrier (46) on which the chip or die (45) is attached.

FIG. 10 details a second embodiment that is fundamentally very similar to the first embodiment detailed in FIG. 9. This second embodiment however deviates from the first embodiment in several respects. This is a so-called semi-active tag in which part of the power is provided by a battery or alike (48). The chip here utilizes a charging circuitry (47) as a part of its Rectifier/power recovery unit (38). The CW signal incident to the CW antenna (1) is rectified, regulated and used as a charge current for the accumulator and the excess power is used by the chip. When this excess energy does not suffice for running the tag, the accumulator charge flows into the tag as needed. Yet another difference between this second embodiment and the first embodiment of FIG. 9 is the sensors interfaced to it. An on-die temperature sensor (49) and an off-die vibration sensor (50) are added to this second embodiment. The information from the sensors can be accessed and used internally to e.g. compensate for the internal function of the tag circuitry or stored and transmitted to the reader as state information in which the object carrying the tag undergoes or has undergone.

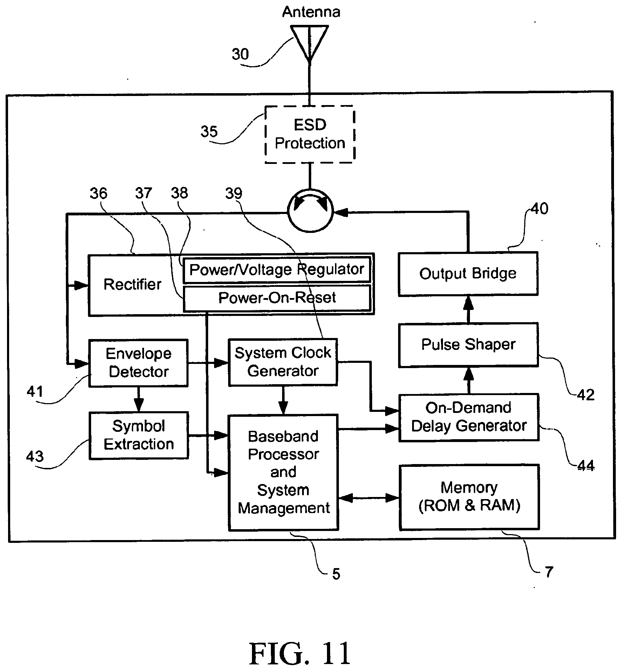

FIG. 11 illustrates a third embodiment of this invention where the CW and TDCIR radios share the same antenna (30). UWB propagation has such requirements on the antenna design that are often contradictory to the requirements set by a narrower CW signal. While the CW antenna is tuned to remain in-band, UWB signals require antennas that are nearly frequency independent in an extremely wide band. However, there are antenna technologies that can allow for a single antenna solution. One class of antennas that can serve both technologies is the so-called fractal antennas. Some fractal antennas exhibit the interesting behavior that the antenna can be used for multiple frequencies. The performance dips in between these bands, but these dips can be beneficial to filter out portions of the spectrum where strong interference is expected, e.g. 2.4 and 5GHz ISM bands, TV and radio bands, etc. This embodiment uses a fifth derivative of Gaussian as its pulse and occupies the spectrum between 3.1 to 10 GHz with a center frequency of roughly 6 GHz. All other function blocks are similar to the first and second embodiments described in FIGS. 9 and 10.

FIG. 12 illustrates the fourth transponder embodiment that implements a TDCIR receiver. The downlink is both a non-TDCIR signal and a TDCIR signal, while the uplink is TDCIR only. The receiver block (10) constitutes a very simple form of ultra wide receiver composed of an ultra wide band Low Noise Amplifier (LNA) (51) that boosts the incoming signals from the TDCIR antenna (2). The amplified signal from LNA is mixed in (53) with a signal template stored in (52). The output of the mixer is forwarded to an integrator (54) that integrates the mixer output in time and then outputs the values to a sample and hold block (56). The output from the S/H block is determined as logical highs and lows through (55) that are fed to the baseband processor (5) for decoding, formatting and parsing. This embodiment is also equipped with a general purpose interface (6) that can be used to connect it to other devices or be used as a programming or testing port.

FIG. 13 illustrates how multiple non-TDCIR bands and channels can be used to better power up and communicate with transponders that are capable of multi-band reception. The incident signal on the antenna (1) is channelized through the appropriate tuner (57) and the signal is rectified, integrated and regulated in a power recovery unit (58). The latter powers up the data and clock recovery unit (59) that in turn detects the data and clock modulated on the signals.

FIG. 14 explains the direction of the signals and the overlapping nature of the energizing signal with respect to the data exchange between the tags (62) and a reader (61) that is capable of multiple simultaneous continuous wave radio transmissions (59 and 60). As explained in FIG. 13, signals on different channels or bands can energize the same tag simultaneously and thereby enhance its ability to gain electrical energy. Different energizing signals can start and stop radiations while overlapping each other intermittently. The capability of the tags to be energized by CW signals in different bands or to communicate over different bands with the readers can also enhance:

> 1) more robust CW communication and location determination. Since different bands behave differently with respect to environmental impacts and exhibit different RF characteristics that result in different noise figure, range, etc., simultaneous utilization of several different bands enhances data communication. Also, some particular frequency-dependent characteristics of RF like path-fading can have severe impacts on the ability to locate a tag with continuous wave signals. Since signals from different readers exhibit path-fading in different patterns depending on the frequency band used by the reader, if the tag can receive continuous wave signal from different bands, the probability that it encounters signal deterioration and path-fading on both bands will be much smaller than when a single band is used. The location determination technique is a downlink, CW location determination approach, not to be confused by the more robust and powerful Impulse Radio location determination ability in the uplink.
> 2) Multi-standard compatibility: Different standards typically use predefined bands of operation; a multiband system automatically means that backward compatibility with several different standards can be effected.
> 3) multi-access techniques: By means of using different bands as a differentiator for accessing different tags or class of tags. A reader capable of accessing tags at different bands can use this ability to send different commands to different tags or categories of tags.

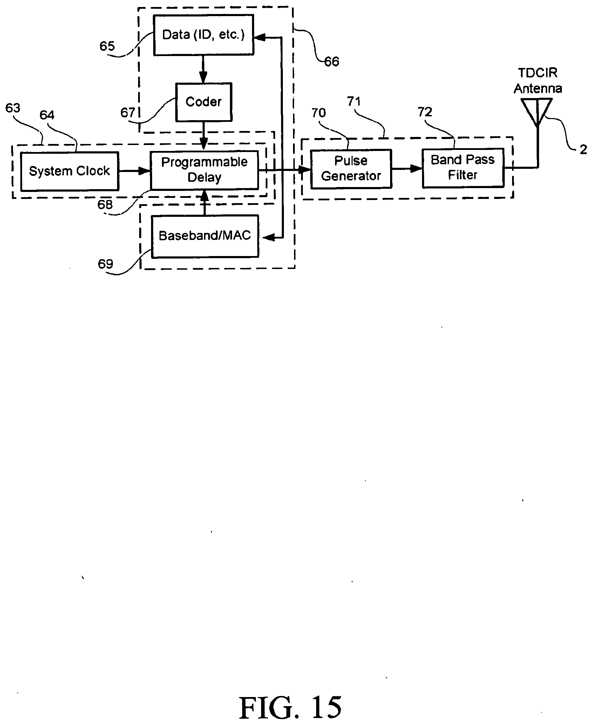

FIG. 15 depicts a block diagram depicting the architecture of the TDCIR transmitter subsystem. Data stored in the tag (65) is coded in accordance with protocols that are well known in the art. Coding fulfills a number of objectives, among which robustness, encryption and spreading are a few to mention. A programmable delay module (68) helps to control the position of the impulse in its own time slot or in a larger time frame; pulse positioning as a modulation technique or otherwise can thereby be achieved. In other embodiments where another modulation approach is used, this module can be complemented or substituted by a different modulator, e.g. a PSK (Phase Shift Keying) modulator. Since the system clock frequency is normally kept low to save power and spectrum, this module is generally needed for higher data rates and more sophisticated multi-access schemes, regardless of modulation technique used. The system clock (64) locally generated or recovered from the incident non-TDCIR signal creates a time base that in turn is used for creating synchronization signals, time slots, time frames, etc. If the recovered clock is a fast clock, it can be directly used by the pulse generator module (70) for shaping the TDCIR impulse; otherwise other pulse generation techniques, such as deployment of a delay circuitry as in module (68) need to be applied. The band pass filter stage (72) will finally keep the propagated signal inside the limits of regulated emissions and the signal is propagated by the TDCIR antenna (2).

FIG. 16 depicts a Gaussian monocycle as used in the TDCIR transmitter of the first embodiment.

FIG. 17 depicts a 5th derivative of a Gaussian as used in the second embodiment.

FIG. 18 depicts the Power Spectral Density of the monocycle (solid line), the 5th derivative of Gaussian (thick dotted line) and the FCC envelope (thin dashed line).

Having thus described the invention in rather full detail, it will be understood that such detail need not be strictly adhered to, but that additional changes and modifications may suggest themselves to one skilled in the art, as long as they fall within the scope of the invention as defined by the subjoined claims.

**Claims**

1.    An asymmetric bandwidth communication system comprising:

> a) a powered interrogator/reader adapted to transmit a continuous downlink RF transmission including a command signal for a transponder or tag;
> b) a transponder or tag receiving said downlink RF transmission, said transponder or tag being at least partially powered by said downlink RF transmission;
> c) said downlink RF transmission command signal being arranged to instruct said transponder or tag to broadcast data;
> d) said transponder or tag being adapted to communicate with said powered interrogator/reader using a Time Domain Carrierless Impulse Radio (TDCIR) uplink having:
>
> > - a fractional bandwidth $B_f$ equal to or greater than 10%, wherein the fractional bandwidth is defined as

$$B_f = 2\frac{f_h - f_l}{f_h + f_l} \cdot 100\%$$

where $f_h$ and $f_l$ are the highest and lowest -3dB frequencies of the signal spectrum, or
- a bandwidth greater than 50 MHz, regardless of said fractional bandwidth, and

e) said powered interrogator/reader being adapted to receive said uplink,

wherein said downlink is a signal transmitted from said interrogator/reader for reception by said transponder or tag, and said uplink is a signal transmitted from said transponder or tag for reception by said interrogator/reader.

2. An asymmetric bandwidth communication system as recited by claim 1, wherein said powered interrogator/reader communicates with said transponder or tag at a frequency of centered on 915 MHz.

3. An asymmetric bandwidth communication system as recited by claim 1, wherein said powered interrogator/reader communicates with said transponder or tag to determine the location of said tag.

4. An asymmetric bandwidth communication system as recited by claim 1, wherein said transponder or tag additionally communicates with said powered interrogator/reader using a continuous wave uplink RF transmission with onboard additional power source.

5. An asymmetric bandwidth communication system as recited by claim 4, wherein said transponder or tag additionally modulates the RF signal by backscatter modulation.

6. An asymmetric bandwidth communication system as recited by claim 4, wherein said transponder or tag is compatible with a legacy RF system communicating with legacy interrogators/readers, and wherein said legacy RF system and said legacy interrogators/readers are those that were not designed to use a Time Domain Carrierless Impulse Radio uplink and a continuous downlink RF transmission including a command signal.

7. An asymmetric bandwidth communication system as recited by claim 4, wherein said system is compatible with transponders of legacy architecture and transponders communicating by Time Domain Carrierless Impulse Radio having an ultra wide band short time duration pulse and a fractional bandwidth equal to or greater than 10%, or a bandwidth greater than 50 MHz, regardless of said fractional bandwidth, and wherein said legacy architecture is one that was not designed to use a Time Domain Carrierless Impulse Radio Uplink and a continuous downlink RF transmission including a command signal.

8. An asymmetric bandwidth communication system as recited by claim 1, wherein said transponder or tag comprises a single common antenna and wherein said transponder or tag receives via said single common antenna continuous RF transmission from said powered interrogator/reader and transmits via said single common antenna to said powered interrogator/reader using said Time Domain Carrierless Impulse Radio uplink.

9. An asymmetric bandwidth communication system as recited by claim 1, wherein said transponder or tag comprises a first antenna and a second antenna and wherein said first antenna is adapted to receive said downlink for powering said transponder or tag, and wherein said second antenna is adapted to broadcast said Time Domain Carrierless Impulse Radio signal.

10. An asymmetric bandwidth communication system as recited by claim 1, wherein said transponder or tag includes memory.

11. An asymmetric bandwidth communication system as recited by claim 1, wherein said transponder or tag includes digital or analog computational circuitry.

12. An asymmetric bandwidth communication system as recited by claim 1, wherein said interrogator/reader and/or said transponder or tag comprises a digital or analog interface to other units.

13. An asymmetric bandwidth communication apparatus, comprising a powered interrogator/reader having at least one downlink transmitter transmitting continuous RF transmission including a command signal and at least one Time Domain Carrierless Impulse Radio receiver, wherein the transmitter and receiver are configured to share a common antenna, wherein said Time Domain Carrierless Impulse Radio receiver is adapted to receive an Ultra Wide Band Impulse Radio signal having an ultra wide bandwidth frequency spectrum of a short time duration pulse and

- a fractional bandwidth equal to or greater than 10%, wherein the fractional bandwidth is defined as

$$B_f = 2\frac{f_h - f_l}{f_h + f_l} \cdot 100\%$$

where f$_h$ and f$_l$ are the highest and lowest -3dB frequencies of the signal spectrum, or
- a bandwidth greater than 50 MHz, regardless of said fractional bandwidth.

14. Transponder or tag powered by receipt of continuous RF transmission and a control signal from an interrogator/reader, the transponder or tag being adapted to transmitting data using a Time Domain Carrierless Impulse Radio (TDCIR) signal to said interrogator/reader, said Time Domain Carrierless Impulse Radio (TDCIR) signal having ultra wide band impulse radio short time duration pulses and

- a fractional bandwidth equal to or greater than 10%, wherein the fractional bandwidth is defined as

$$B_f = 2\frac{f_h - f_l}{f_h + f_l} \cdot 100\%$$

where f$_h$ and f$_l$ are the highest and lowest -3dB frequencies of the signal spectrum, or
- a bandwidth greater than 50 MHz, regardless of said fractional bandwidth.

**Patentansprüche**

1. Kommunikationssystem mit asymmetrischer Bandbreite, umfassend:

a) einen mit Strom versorgten Abfrager/Leser, angepasst, eine kontinuierliche Downlink-HF-Übermittlung zu übermitteln, die ein Steuersignal für einen Transponder oder ein Tag enthält,
b) einen Transponder oder ein Tag, der/das die Downlink-HF-Übermittlung empfängt, wobei der Transponder oder das Tag zumindest teilweise durch die Downlink-HF-Übermittlung versorgt wird;
c) wobei das Downlink-HF-Übermittlungs-Steuersignal so eingerichtet ist, dass es den Transponder oder das Tag anweist, Daten auszusenden;
d) wobei der Transponder oder das Tag angepasst ist, mit dem mit Strom versorgten Abfrager/Leser unter Verwendung eines trägerlosen Zeitbereichs-Impulsfunk-Uplinks (TDCIR) zu kommunizieren, der folgendes aufweist:

- eine partielle Bandbreite B$_f$, die gleich oder größer ist als 10 %, wobei die partielle Bandbreite definiert ist als

$$B_f = 2\ \frac{f_h - f_l}{f_h + f_l} \cdot 100\ \%,$$

wobei f$_h$ und f$_l$ die höchste und die niedrigste -3dB-Frequenz des Signalspektrums sind, oder
- eine Bandbreite von mehr als 50 MHz, unabhängig von der partiellen Bandbreite, und

e) der mit Strom versorgte Abfrager/Leser angepasst ist, den Uplink zu empfangen,

wobei der Downlink ein von dem Abfrager/Leser übermitteltes Signal zum Empfangen durch den Transponder oder das Tag ist und der Uplink ein von dem Transponder oder Tag übermitteltes Signal zum Empfangen durch den Abfrager/Leser ist.

2. Kommunikationssystem mit asymmetrischer Bandbreite nach Anspruch 1, wobei der mit Strom versorgte Abfrager/Leser mit dem Transponder oder Tag bei einer Frequenz kommuniziert, die bei 915 MHz zentriert ist.

3. Kommunikationssystem mit asymmetrischer Bandbreite nach Anspruch 1, wobei der mit Strom versorgte Abfrager/Leser mit dem Transponder oder Tag kommuniziert, um den Ort des Tags zu bestimmen.

4. Kommunikationssystem mit asymmetrischer Bandbreite nach Anspruch 1, wobei der Transponder oder das Tag zusätzlich mit dem mit Strom versorgten Abfrager/Leser unter Verwendung einer kontinuierlichen Uplink-HF-Übermittlung mit einer zusätzlichen bordeigenen Stromquelle kommuniziert.

5. Kommunikationssystem mit asymmetrischer Bandbreite nach Anspruch 4, wobei der Transponder oder das Tag das HF-Signal durch Rückstreumodulation moduliert.

6. Kommunikationssystem mit asymmetrischer Bandbreite nach Anspruch 4, wobei der Transponder oder das Tag kompatibel mit einem Alt-HF-System ist, das mit Alt-Abfragern/-Lesern kommuniziert, und wobei das Alt-HF-System und die Alt-Abfrager/-Leser diejenigen sind, die nicht ausgeführt waren, einen trägerlosen Zeitbereichs-Impulsfunk-Uplink (TDCIR) und eine kontinuierliche Downlink-HF-Übermittlung einschließlich eines Steuersignals zu nutzen.

7. Kommunikationssystem mit asymmetrischer Bandbreite nach Anspruch 4, wobei das System kompatibel ist mit Transpondern mit Alt-Architektur und Transpondern, die über trägerlosen Zeitbereichs-Impulsfunk mit einem Ultrabreitband-Kurzzeitpuls und einer partiellen Bandbreite gleich oder größer als 10 % oder einer Bandbreite größer als 50 MHz, unabhängig von der partiellen Bandbreite kommunizieren,
und
wobei die Alt-Architektur eine solche ist, die nicht ausgeführt war, einen trägerlosen Zeitbereichs-Impulsfunk-Uplink und eine kontinuierliche Downlink-HF-Übermittlung zu nutzen,
die ein Steuersignal enthält.

8. Kommunikationssystem mit asymmetrischer Bandbreite nach Anspruch 1, wobei der Transponder oder das Tag eine einzige gemeinsame Antenne umfasst, und wobei der Transponder oder das Tag über die einzige gemeinsame Antenne eine kontinuierliche HF-Übermittlung von dem mit Strom versorgten Abfrager/Leser empfängt und über die einzige gemeinsame Antenne zu dem mit Strom versorgten Abfrager/Leser unter Verwendung des trägerlosen Zeitbereichs-Impulsfunk-Uplinks übermittelt.

9. Kommunikationssystem mit asymmetrischer Bandbreite nach Anspruch 1, wobei der Transponder oder das Tag eine erste Antenne und eine zweite Antenne umfasst, und wobei die erste Antenne angepasst ist, den Downlink zum Versorgen des Transponders oder des Tags zu empfangen, und wobei die zweite Antenne angepasst ist, das trägerlose Zeitbereichs-Impulsfunksignal auszusenden.

10. Kommunikationssystem mit asymmetrischer Bandbreite nach Anspruch 1, wobei der Transponder oder das Tag einen Speicher enthält.

11. Kommunikationssystem mit asymmetrischer Bandbreite nach Anspruch 1, wobei der Transponder oder das Tag digitale oder analoge Computerschaltungen enthält.

12. Kommunikationssystem mit asymmetrischer Bandbreite nach Anspruch 1, wobei der Abfrager/Leser und/oder der Transponder oder das Tag eine digitale oder analoge Schnittstelle zu anderen Einheiten umfasst.

13. Kommunikationsvorrichtung mit asymmetrischer Bandbreite, umfassend einen mit Strom versorgten Abfrager/Leser mit mindestens einem Downlink-Übermittler, der eine kontinuierliche HF-Übermittlung übermittelt, die ein Steuersignal enthält, und mindestens einen trägerlosen Zeitbereichs-Impulsfunk-Empfänger, wobei der Obermittler und der Empfänger ausgestaltet sind, eine gemeinsame Antenne zu teilen,
wobei der trägerlose Zeitbereichs-Impulsfunk-Empfänger angepasst ist, ein Ultrabreitband-Impulsfunksignal zu empfangen, mit einem Ultrabreitband-Frequenzspektrum eines Kurzzeitpulses und

- einer partiellen Bandbreite, die gleich oder größer ist als 10 %, wobei die partielle Bandbreite definiert ist als

$$B_f = 2\,\frac{f_h - f_l}{f_h + f_l} \cdot 100\ \%,$$

wobei $f_h$ und $f_l$ die höchste und die niedrigste -3dB-Frequenz des Signalspektrums sind, oder
- einer Bandbreite von mehr als 50 MHz, unabhängig von der partiellen Bandbreite.

14. Transponder oder Tag, mit Strom versorgt durch das Empfangen einer kontinuierlichen HF-Übermittlung und eines Steuersignals von einem Abfrager/Leser, wobei der Transponder oder das Tag angepasst ist, Daten unter Verwendung eines trägerlosen Zeitbereichs-Impulsfunk-Uplinks (TDCIR) an den Abfrager/Leser zu übermitteln, wobei das trägerlose Zeitbereichs-Impulsfunksignal (TDCIR-Signal) aufweist:

Ultrabreitband-Impulsfunk-Kurzzeitpulse und

- eine partielle Bandbreite, die gleich oder größer ist als 10 %, wobei die partielle Bandbreite definiert ist als

$$B_f = 2\,\frac{f_h - f_l}{f_h + f_l} \cdot 100\ \%,$$

wobei $f_h$ und $f_l$ die höchste und die niedrigste -3dB-Frequenz des Signalspektrums sind, oder

- eine Bandbreite von mehr als 50 MHz, unabhängig von der partiellen Bandbreite.

**Revendications**

1. Système de communication à largeur de bande asymétrique, comprenant :

a. un interrogateur/lecteur alimenté adapté pour transmettre une transmission RF descendante continue contenant un signal de commande pour un transpondeur ou une étiquette ;
b. un transpondeur ou une étiquette recevant ladite transmission RF descendante, ledit transpondeur ou étiquette étant au moins partiellement alimenté par ladite transmission RF descendante ;

c. ledit signal de commande de transmission RF descendante étant configuré pour instruire audit transpondeur ou étiquette de diffuser des données ;

d. ledit transpondeur ou étiquette étant adapté pour la communication avec ledit interrogateur/lecteur alimenté à l'aide d'une liaison montante de type Time Domain Carrierless Impulse Radio (TDCIR - radio impulsion sans porteuse de domaine temporel) comprenant :

- une largeur de bande relative B$_f$ égale ou supérieure à 10%, sachant que la largeur de bande relative est définie par la formule suivante

$$B_f = 2\,\frac{f_h - f_l}{f_h + f_l}\cdot 100\ \%$$

dans laquelle f$_h$, et f$_l$ sont les plus hautes et basses fréquences -3dB du spectre de signaux, ou
- ou une largeur de bande supérieure à 50 MHz indépendamment de ladite largeur de bande relative, et

e. ledit interrogateur/lecteur alimenté étant adapté pour recevoir ladite transmission montante,

dans lequel ladite transmission descendante est un signal transmis depuis ledit interrogateur/lecteur en vue de la réception par ledit transpondeur ou étiquette, et ladite transmission montante est un signal transmis depuis ledit transpondeur ou étiquette en vue de la réception par ledit interrogateur/lecteur.

2. Système de communication à largeur de bande asymétrique selon la revendication 1, dans lequel ledit interrogateur/lecteur alimenté communique avec ledit transpondeur ou étiquette à une fréquence centrée sur 915 MHz.

3. Système de communication à largeur de bande asymétrique selon la revendication 1, dans lequel ledit interrogateur/lecteur alimenté communique avec ledit transpondeur ou étiquette pour déterminer la position de ladite étiquette.

4. Système de communication à largeur de bande asymétrique selon la revendication 1, dans lequel ledit transpondeur ou ladite étiquette communique de surcroît avec ledit interrogateur/lecteur alimenté à l'aide d'une transmission RF à ondes continues conventionnelles avec source d'alimentation à bord supplémentaire.

5. Système de communication à largeur de bande asymétrique selon la revendication 4, dans lequel ledit transpondeur ou ladite étiquette module de surcroît le signal RF par modulation de rétrodiffusion.

6. Système de communication à largeur de bande asymétrique selon la revendication 4, dans lequel ledit transpondeur ou étiquette est compatible avec un système RF antérieur communiquant avec des interrogateurs/lecteurs antérieurs, et dans lequel ledit système RF antérieur et lesdits interrogateurs/lecteurs antérieurs sont ceux qui n'ont pas été conçus pour utiliser une transmission montante de type Time Domain Carrierless Impulse Radio (TDCIR - radio impulsion sans porteuse de domaine temporel) et une transmission RF descendante continue contenant un signal de commande.

7. Système de communication à largeur de bande asymétrique selon la revendication 4, dans lequel ledit système est compatible avec les transpondeurs d'architecture antérieure et les transpondeurs communiquant via Time Domain Carrierless Impulse Radio (TDCIR - radio impulsion sans porteuse de domaine temporel) possédant une impulsion de courte durée ultralarge et une largeur de bande relative égale ou supérieure à 10%, ou une largeur de bande supérieure à 50 MHz indépendamment de ladite largeur de bande relative, et dans lequel ladite architecture antérieure est une architecture qui n'a pas été conçue pour utiliser une Time Domain Carrierless Impulse Radio Uplink (transmission montant en radio impulsion sans porteuse de domaine temporel) et une transmission RF descendante continue contenant un signal de commande.

8. Système de communication à largeur de bande asymétrique selon la revendication 1, dans lequel ledit transpondeur ou ladite étiquette comprend une antenne commune unique et dans lequel ledit transpondeur ou ladite étiquette reçoit via ladite antenne commune unique une transmission RF continue depuis ledit interrogateur/lecteur alimenté et transmet via ladite antenne commune unique vers ledit interrogateur/lecteur à l'aide de ladite transmission montante de type Time Domain Carrierless Impulse Radio (TDCIR - radio impulsion sans porteuse de domaine temporel).

9. Système de communication à largeur de bande asymétrique selon la revendication 1, dans lequel ledit transpondeur ou ladite étiquette comprend une première antenne et une seconde antenne, et dans lequel ladite première antenne est adaptée pour recevoir ladite transmission descendante pour alimenter ledit transpondeur ou ladite étiquette, et dans lequel ladite seconde antenne est adaptée pour diffuser ledit signal de type Time Domain Carrierless Impulse Radio (TDCIR - radio impulsion sans porteuse de domaine temporel).

**10.** Système de communication à largeur de bande asymétrique selon la revendication 1, dans lequel ledit transpondeur ou ladite étiquette comporte une mémoire.

**11.** Système de communication à largeur de bande asymétrique selon la revendication 1, dans lequel ledit transpondeur ou ladite étiquette comporte une circuiterie computationnelle numérique ou analogique.

**12.** Système de communication à largeur de bande asymétrique selon la revendication 1, dans lequel ledit interrogateur/lecteur et/ou ledit transpondeur ou ladite étiquette comporte une interface numérique ou analogique vers d'autres unités.

**13.** Appareil de communication à largeur de bande asymétrique, comprenant un interrogateur/lecteur alimenté possédant au moins un émetteur en liaison descendante émettant une transmission RF continue comprenant un signal de commande et au moins un récepteur de type Time Domain Carrierless Impulse Radio (TDCIR - radio impulsion sans porteuse de domaine temporel), dans lequel l'émetteur et le récepteur sont configurés pour partager une antenne commune,

dans lequel le récepteur de type Time Domain Carrierless Impulse Radio (TDCIR - radio impulsion sans porteuse de domaine temporel) est adapté pour recevoir un signal radio puisé à bande ultralarge possédant un spectre de fréquences de largeur de bande ultralarge d'une impulsion de courte durée et

    - une largeur de bande relative égale ou supérieure à 10%, sachant que la largeur de bande relative est définie par la formule suivante

$$B_f = 2 \, \frac{f_h - f_l}{f_h + f_l} \cdot 100 \, \%$$

dans laquelle $f_h$, et $f_l$ sont les plus hautes et basses fréquences -3dB du spectre de signaux, ou
- ou une largeur de bande supérieure à 50 MHz indépendamment de ladite largeur de bande relative.

**14.** Transpondeur ou étiquette alimenté par réception d'une transmission RF continue et un signal de commande depuis un interrogateur/lecteur, le transpondeur ou l'étiquette étant adapté pour émettre des données à l'aide d'un signal de type Time Domain Carrierless Impulse Radio (TDCIR - radio impulsion sans porteuse de domaine temporel) vers ledit interrogateur/lecteur, ledit signal de type Time Domain Carrierless Impulse Radio (TDCIR - radio impulsion sans porteuse de domaine temporel) possédant des impulsions radio à bande ultralarge de courte durée et

    - une largeur de bande relative égale ou supérieure à 10%, sachant que la largeur de bande relative est définie par la formule suivante

$$B_f = 2 \, \frac{f_h - f_l}{f_h + f_l} \cdot 100 \, \%$$

dans laquelle $f_h$, et $f_l$ sont les plus hautes et basses fréquences -3dB du spectre de signaux, ou
- ou une largeur de bande supérieure à 50 MHz indépendamment de ladite largeur de bande relative.

FIG. 1

FIG. 2

FIG.3

TDCIR
Antenna

2

Non-TDCIR
Antenna

1

10  8                    9

| Power Unit | Clock Unit |

| TDCIR Receiver | Memory |

Baseband Processor and System Management

| Non-TDCIR Transmitter | Interface |

7

5

12                    6

# FIG. 4

FIG. 5

FIG. 6

FIG. 7

FIG. 8

FIG. 9

FIG. 10

FIG. 11

FIG. 12

Non-TDCIR
Antenna

1

Channel P Tuner

Channel ... Tuner

Channel Q Tuner

57

Power
Recovery
Unit

58

59

Data and
Clock
Recovery
Unit

FIG. 13

59

Energizing signal in channel P

Energizing signal in channel P

Energizing signal in channel Q

Reader command

Reader command

61

60

Tag 1 response

Tag 2 response

...

Tag n response

Tag 1 response

Tag 2 response

...

Tag n response

62

# FIG. 14

FIG. 15

Gaussian monocycle pulse

FIG. 16

FIG. 17

FIG. 18

## REFERENCES CITED IN THE DESCRIPTION

### Patent documents cited in the description

- US 3299424 A
- US 3689885 A
- US 3713148 A
- US 3516575 A
- US 3541995 A
- US 5677927 A
- US 6550674 B

### Non-patent literature cited in the description

- Monocycle: A Study of a Versatile Low Power CMOS Pulse Generator for Ultra Wideband Radios. **KEVIN M. MARSDEN.** Masters Thesis. Virginia Polytechnic Institute and State University, December 2003
- **H. KIM ; D. PARK ; Y. JOO.** 5th derivative: All-digital low-power CMOS pulse generator for UWB system. *ELECTRONICS LETTERS,* 25 November 2004, vol. 40 (24
- **CARLES PUENTE-BALIARDA ; JORDI ROMEU ; RAFAEL POUS ; ANGEL CARDAMA.** On the Behavior of the Sierpinski Multiband Fractal Antenna. *IEEE TRANSACTIONS ON ANTENNAS AND PROPAGATION,* April 1998, vol. 46 (4